# EUROPÄISCHE PATENTSCHRIFT

(11) **EP 1 245 417 B1**
(45) Veröffentlichungstag und Bekanntmachung des Hinweises auf die Patenterteilung: **07.06.2006**
(21) Anmeldenummer: 02005585.1
(22) Anmeldetag: 12.03.2002
(51) Int. Cl.: B60H 1/00

(54) **Wärmeübertrager, insbesondere Ladeluftkühler**
Heat exchanger, more particularly supercharge air cooler
Echangeur de chaleur, en particulier radiateur d'air de suralimentation

(30) Priorität: 27.03.2001 DE 10115123
(43) Veröffentlichungstag der Anmeldung: 02.10.2002
(73) Patentinhaber: Behr GmbH & Co. KG, 70469 Stuttgart (DE)
(72) Erfinder: Kämmler, Georg, Dr. Ing., 70439 Stuttgart (DE); Hinderberger, Hans-Dieter, Dipl.-Ing.(FH), 70499 Stuttgart (DE); Schüle, Matthias, Dipl.-Ing., 74321 Bietigheim-Bissingen (DE)
(74) Vertreter: Grauel, Andreas

(56) Entgegenhaltungen:
- EP-A- 0 791 798
- DE-A- 1 778 235
- DE-A- 19 621 740
- FR-A- 2 772 899

## Beschreibung

Die Erfindung betrifft einen Ladeluftkühler oder Kühlmittelkühler, insbesondere für Kraftfahrzeuge gemäß dem Oberbegriff des Anspruchs 1.

Aus dem Shell Lexikon Verbrennungsmotoren, Supplement von ATZ und MTZ, Folge 33, ist ein Ladeluftkühler bekannt. Er besteht aus einem Rippenrohrblock, der mit einer Ladeluft-Eintrittskammer und einer Ladeluft-Austrittskammer verbunden ist. Dabei kann heiße Ladeluft von einer Brennkraftmaschine des Kraftfahrzeuges durch Flachrohre des Rippenrohrblocks strömen und führt über zwischen den Flachrohren zugeordneten Rippen, die von Umgebungsluft beaufschlagt sind, einen Großteil der Wärme an die Umgebungsluft ab. Im Zuge der schärfer werdenden Abgasbestimmungen werden die thermischen Anforderungen an die Komponenten von Ladeluftkühlern ständig erhöht. Bisher verwendete Materialien für die Sammelkammern, beispielsweise Polyamid, können diesen thermischen Bedingungen bei entsprechend hohen Innendruckbeaufschlagungen nicht immer standhalten. Bei hohen Temperaturen treten insbesondere Oxydationen auf, die letztlich zur Zerstörung des Kühlers führen können. Eine Verwendung von metallischen Sammelkammern, die den Belastungen gewachsen wären, oder von sehr hochwertigen Spezialkunststoffen, scheidet aufgrund der deutlich höheren Kosten aus wirtschaftlichen Erwägungen in der Regel aus. Nachteilig an einem solchen oben genannten Ladeluftkühler ist demnach, daß er in der bekannten Konfiguration den zukünftig geforderten thermischen Anforderungen nicht gewachsen ist.

Bei Kühlmittelkühlern werden auch Kunststoffbauteile verwendet. Solche sind beispielsweise die Wasserkästen von Kühlmittelkühlern oder Heizkörpem, Gehäuse von Thermostaten oder von Wasserpumpen oder Rohre oder Gruppen von Rohren. Solche Kunststoffbauteile, die Kühlmittel führen, können durch das Kühlmittel selbst altem. Dieser Prozeß ist als Hydrolyse bekannt.

Die EP 0791798 A1 offenbart einen Sammelkasten eines Wärmetauschers aus Kunststoff mit einem internen Belag.

Der Erfindung liegt die Aufgabe zugrunde, einen Wärmeübertrager oder insbesondere kühlmittelführende oder luftführende Bauteile, wie beispielsweise einen Ladeluftkühler, Kühlmittelkühler oder beispielsweise die Wasserkästen von Kühlmittelkühlern oder Heizkörpern, Gehäuse von Thermostaten oder von Wasserpumpen oder Rohre oder Gruppen von Rohren, der eingangs genannten Art derart weiterzubilden, daß diese wirtschaftlich herzustellen sind und gleichzeitig den thermischen Anforderungen gerecht werden.

Diese Aufgabe wird mit den Merkmalen des Anspruchs 1 gelöst.

Erfindungsgemäß ist vorgesehen, daß luftführende oder kühlmittelführende Teile, wie beispielsweise die Eintrittskammer und/oder die Austrittskammer für ein zu kühlendes Medium oder andere kühlmittelführende Teile beispielsweise aus einem thermoplastischen Kunststoffwerkstoff besteht und wenigstens bereichsweise mit einer Oberflächenbeschichtung versehen ist.

Durch eine solche Bauweise, der grundsätzlich eine bereits bisher übliche Eintritts- bzw. Austrittskammergestaltung zugrunde liegt und die daher sehr wirtschaftlich ist und durch eine zusätzliche Oberflächenbeschichtung, die die thermische Belastbarkeit der Sammelkammer durch ihre oxidationshemmende Wirkung deutlich erhöht, kann ein Wärmeübertrager, insbesondere ein Ladeluftkühler, unter wirtschaftlichen Gesichtspunkten verträglich und unter thermischen Gesichtspunkten den Anforderungen entsprechend ausgeführt werden. Hinsichtlich der hydrolysemindernden Wirkung kann ebenfalls eine Oberflächenbeschichtung, wie beispielsweise Lack verwendet werden.

Auch unter Stabilitätsgesichtspunkten können durch eine solche Gestaltung Vorteile erzielt werden, da die üblichen Werkstoffe, wie Polyamid, in der Regel duktiler sind als hochtemperaturfeste Werkstoffe. Diese üblichen Werkstoffe lassen sich einfacher verarbeiten, und die zur Bearbeitung notwendigen Werkzeuge unterliegen einer geringeren Abnutzung, wodurch die Werkzeugstandzeit erhöht ist. Die Oberflächenbeschichtung wird dabei vorzugsweise mit Polysiloxan, Epoxiphenol, Poliamid-lmid-Lack oder einem Polyester-Werkstoff ausgeführt und auf einen Basiswerkstoff wie beispielsweise Polyamid aufgetragen. In Versuchen hat sich gezeigt, daß eine Oberflächenbeschichtung mit einer Dicke von 0,001 mm bis 0,1 mm, vorzugsweise von 0,01 mm bis 0,1 mm und besonders bevorzugt zwischen 0,015 mm bis 0,05 mm, bereits deutliche Verbesserungen der thermischen Verträglichkeit bewirken. Relativ dünne Beschichtungen haben den Vorteil, daß sie elastischer sind und nicht so schnell wie dickere Beschichtungen spröde werden.

Mit besonderem Vorteil ist die Erfindung in einem Ladeluftkühler einsetzbar, um bei hohen Temperaturen der Ladeluft ein Oxydieren der Kammeroberfläche zu verhindern. Bei Einsatz der Erfindung in einem Kühlmittelkühler kann durch die Oberflächenschicht der Kühler vor einer Hydrolyse des Werkstoffs geschützt werden und so die Lebensdauer des Kühlers erhöht werden.

Ein Ausführungsbeispiel der Erfindung ist in den Zeichnungen dargestellt und wird im folgenden näher beschrieben.

Hierbei zeigt:
- Fig. 1: Eine räumliche Darstellung einer Sammelkammer eines Ladeluftkühlers;
- Fig. 2: eine Schnittdarstellung der Sammelkammer nach Fig. 1.

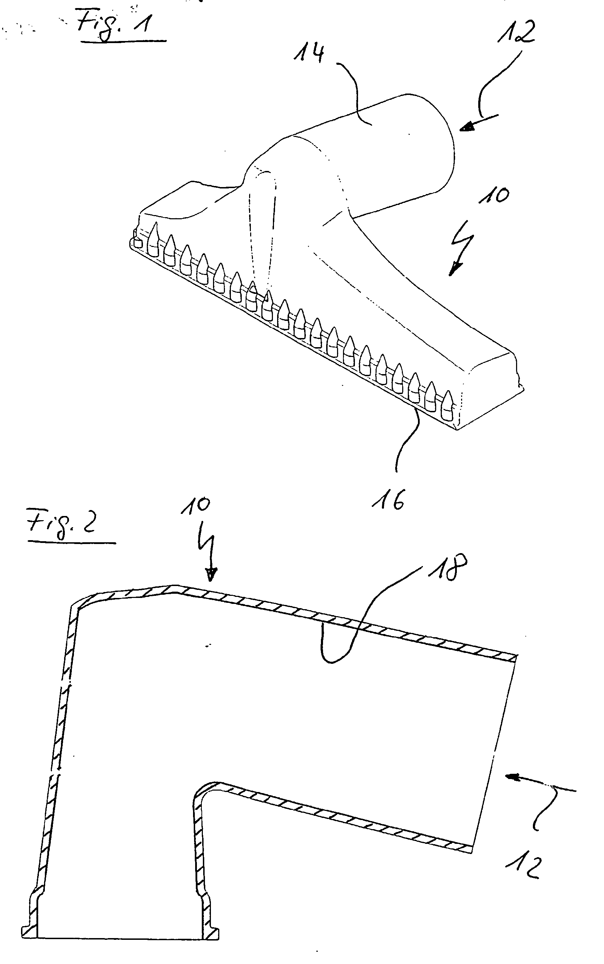

Ein Ausführungsbeispiel der Erfindung wird beispielsweise anhand eines Ladeluftkühlers erläutert. Gemäß der Erfindung können aber auch andere oben genannte Bauteile statt dessen denkbar sein. Fig. 1 zeigt eine räumliche Darstellung einer Sammelkammer 10 des nicht näher dargestellten Ladeluftkühlers. Diese Sammelkammer 10, die eine Ladeluft-Eintrittskammer darstellt, besteht aus einem Kunststoffwerkstoff in Form von Polyamid. Die Ladeluft-Eintrittskammer dient dazu, heiße Ladeluft 12 von einer Brennkraftmaschine eines Kraftfahrzeuges zu einem nicht dargestellten Rippenrohrblock zu führen und gleichmäßig auf die Rohre zu verteilen. In ähnlicher oder identischer Ausgestaltung könnte sie auch als Ladeluft-Austrittskammer ausgeführt sein. Ein Rippenrohrblock für Wärmetauscher ist allgemein bekannt und soll daher hier nicht weiter beschrieben werden.

Die Sammelkammer 10 weist einen Anschluß 14 auf, der mit einer Zuführung in Richtung der Brennkraftmaschine verbunden ist, und eine Rohrboden-Anschlußfläche 16, die in direktem Kontakt oder mit einer Dichtung versehen in Kontakt mit einem Rohrboden des Rippenrohrblocks steht.

Fig. 2 zeigt eine Schnittdarstellung durch die Sammelkammer 10 gemäß Fig. 1, in der zu erkennen ist, daß die nach innen gerichtete Fläche der Sammelkammer 10 mit einer Oxidationsschutzbeschichtung 18 versehen ist. Die Oberflächenbeschichtung 18 besteht dabei vorzugsweise aus Polysiloxan, Epoxiphenol, Poliamid-lmid-Lack oder einem Polyester-Werkstoff, wobei die Sammelkammer selbst beispielsweise aus einem üblichen Basiswerkstoff in Form von Polyamid o.ä. besteht.

Versuche haben gezeigt, daß für Temperaturbeständigkeiten bis 160 °C als Basis-Werkstoff vorzugsweise Polyamid, wie beispielsweise PA66-GF30 (Polyamid) mit einem Glasfaser-Gewichtsanteil von 30% eingesetzt werden können, für Temperaturen bis 200 °C vorzugsweise Polyphtalamid, wie PPA-GF40 (Polyphtalamid) mit einem Glasfaser-Gewichtsanteil von 40% und für Temperaturen über 200 °C vorzugsweise Polyphenylensulfid, wie PPS-GF40 (Polyphenylensulfid) mit einem Glasfaser-Gewichtsanteil von ebenfalls 40%. Statt der angegebenen Glasfaseranteile können auch andere Anteile in anderer prozentualer Höhe bzw. aus Kohlenstoff oder anderen Materialien verwendet werden. Alternativ könnte auch ein amorpher Werkstoff, wie Polyarylethersulfon (PES) oder Polyetherimid (PEI), eingesetzt werden.

Als Werkstoff zur Oberflächenbeschichtung eignet sich beispielsweise ein Polyester-Werkstoff (U04KD004 der BASF AG). Folgende Werkstoffe eignen sich ebenfalls für eine Beschichtung: teilkristalline Werkstoffe, wie Polyaryletherketon (PEEK), Polyphtalamid (PPA) oder ein teilaromatisches Polyamid (wie beispielsweise PA6T), oder flüssigkristalline Polymere (LCP).

Zur Beschichtung der Sammelkammern mit dem Oberflächenbeschichtungswerkstoff ist jedes gängige Beschichtungsverfahren einsetzbar. Vorzugsweise ist jedoch ein Spritz-, Tauch- oder Streichverfahren einsetzbar. Auch sind Verfahren, wie CVD, PVD, Aufstäuben oder galvanische Prozesse gegebenenfalls vorteilhaft.

## Patentansprüche

1. Ladeluftkühler oder Kühlmittelkühler, insbesondere für Kraftfahrzeuge, mit einem Rippenrohrblock und wenigstens einer Eintrittskammer und wenigstens einer Austrittskammer für ein Medium, wobei die Eintrittskammer und/oder die Austrittskammer aus einem thermoplastischen Kunststoffwerkstoff besteht und wenigstens bereichsweise mit einer Oberflächenbeschichtung versehen ist, **dadurch gekennzeichnet, daß** die Oberflächenbeschichtung eine Oxidationsschutzbeschichtung oder ein Oxidationsschutzlack ist, wobei die Oberflächenbeschichtung eine Beschichtungsdicke von 0,001 mm bis 0,1 mm, vorzugsweise 0,01 mm bis 0,1 mm, aufweist.

2. Vorrichtung nach Anspruch 1, **dadurch gekennzeichnet, daß** der Kunststoffwerkstoff als Polyphtalamid (PPA), Polyphenylensulfid (PPS) oder Polyamid (PA) vorliegt.

3. Vorrichtung nach Anspruch 2, **dadurch gekennzeichnet, daß** dem Kunststoff Verstärkungsstoffe, insbesondere Glas- und/oder Kohlefasem, zugesetzt sind.

4. Vorrichtung nach Anspruch 1, 2 oder 3, **dadurch gekennzeichnet, daß** der Kunststoffwerkstoff als amorpher Werkstoff, wie PES (Polyarylethersulfon) oder PEI (Polyetherimid), vorzugsweise aber Polycarbonat (PC), vorliegt.

5. Vorrichtung nach einem der vorhergehenden Ansprüche, **dadurch gekennzeichnet, daß** die Oberflächenbeschichtung (18) mit Polysiloxan oder einem Polyester-Werkstoff oder mit einem teilkristallinen Werkstoff, wie PEEK (Polyaryletherketon), PPA oder PA6T, oder flüssigkristallinen, wie LCP, erfolgt.

6. Vorrichtung nach einem der vorhergehenden Ansprüche, **dadurch gekennzeichnet, daß** die Oberflächenbeschichtung (18) eine Beschichtungsdicke von 0,001 mm bis 0,1 mm, vorzugsweise 0,01 mm bis 0,1 mm, aufweist.

7. Vorrichtung nach einem der vorhergehenden Ansprüche, **dadurch gekennzeichnet, daß** die Eintrittskammer und die Austrittskammer eine Wandstärke von etwa 1,0 mm bis 4,5 mm aufweisen.

8. Vorrichtung nach einem der vorhergehenden Ansprüche, **dadurch gekennzeichnet, daß** die Oberflächenbeschichtung auf der nach innen gerichteten Fläche der Eintrittskammer und/oder der Austrittskammer vorliegt.

9. Vorrichtung nach einem der vorhergehenden Ansprüche, **dadurch gekennzeichnet, daß** die Oberflächenbeschichtung auf der nach innen und der nach außen gerichteten Fläche der Eintrittskammer und/oder der Austrittskammer vorliegt.

10. Verfahren zum Auftragen einer Oberflächenbeschichtung auf die Eintrittskammer und/oder die Austrittskammer eines Wärmeübertrager nach einem der vorhergehenden Ansprüche, **dadurch gekennzeichnet, daß** die Oberflächenbeschichtung durch ein Spritz-Lackierverfahren oder ein Tauch-Lackierverfahren erfolgt.

## Claims

1. Supercharge air cooler or coolant medium cooler, in particular for motor vehicles, with a finned tube block and at least one inlet chamber and at least one outlet chamber for a medium, the inlet chamber and/or the outlet chamber consisting of a plastic material and being provided in at least some areas with a surface coating, **characterised in that** the surface coating is an oxidation protection coating or an oxidation protection lacquer, and the thickness of the surface coating is 0.001 mm to 0.01 mm, preferably 0.01 mm to 01.1 mm.

2. Device according to Claim 1, **characterised in that** the plastic material is a polyphthalamide (PPA), polyphenylsulphids)PPS) or polyamide (PA).

3. Device according to Claim 2, **characterised in that** reinforcing materials, in particular glass and/or carbon fibres, are added to the plastic material.

4. Device according to Claims 1, 2 or 3, **characterised in that** the plastic material is an amorphous material such as PES (polyarylethersulphone) or PEI (polyetherimide), but preferably polycarbonate (PC).

5. Device according to any of the preceding claims, **characterised in that** the surface coating (18) consists of polysiloxane or a polyester material, or with a partially crystalline material such as PEEK (polyaryletherketone), PPA or PA6T, or a liquid crystalline material such as LCP.

6. Device according to any of the preceding claims, **characterised in that** the thickness of the surface coating (18) is 0.001 mm to 0.1 mm, preferably 0.01 mm to 0.1 mm.

7. Device according to any of the preceding claims, **characterised in that** the wall thickness of the inlet chamber and the outlet chamber is about 1.0 mm to 4.5 mm.

8. Device according to any of the preceding claims, **characterised in that** the surface coating is present on the inward-facing surface of the inlet chamber and/or the outlet chamber.

9. Device according to any of the preceding claims, **characterised in that** the surface coating is present on the inward-facing and on the outward-facing surfaces of the inlet chamber and/or the outlet chamber.

10. Method for applying a surface coating on the inlet chamber and/or the outlet chamber of a heat exchanger according to any of the preceding claims, **characterised in that** the surface coating is applied by a spray lacquering process or an immersion lacquering process.

## Revendications

1. Refroidisseur d'air de suralimentation ou refroidisseur à réfrigérant, en particulier pour véhicules automobiles, comprenant un bloc-tube à ailettes et au moins une chambre d'entrée et au moins une chambre de sortie pour un fluide, la chambre d'entrée et/ou la chambre de sortie étant à base d'un matériau synthétique thermoplastique et étant doté au moins par endroits d'un revêtement de surface, **caractérisé en ce que** le revêtement de surface est une couche de protection contre l'oxydation ou un vernis de protection contre l'oxydation, le revêtement de surface présentant une épaisseur de revêtement de 0,001 mm jusqu'à 0,1 mm, de préférence 0,01 mm jusqu'à 0,1 mm.

2. Dispositif selon la revendication 1, **caractérisé en ce que** le matériau synthétique est présent sous la forme de polyphtalamide (PPA), de sulfure de polyphénylène (PPS) ou de polyamide (PA).

3. Dispositif selon la revendication 2, **caractérisé en ce que** des matériaux de renfort, en particulier des fibres de verre et/ou de carbone, sont ajoutés au plastique.

4. Dispositif selon la revendication 1, 2 ou 3, **caractérisé en ce que** le matériau synthétique est présent sous la forme de matériau amorphe, comme le PES (polyaryléthersulfone) ou le PEI (polyétherimide), mais de préférence comme le polycarbonate (PC).

5. Dispositif selon l'une quelconque des revendications précédentes, **caractérisé en ce que** le revêtement de surface (18) s'effectue avec du polysiloxane ou un matériau polyester ou avec un matériau semi-cristallin comme le PEEK (polyaryléthercétone), le PPA ou le PA6T ou des matériaux à cristaux liquides, comme le LCP.

6. Dispositif selon l'une quelconque des revendications précédentes, **caractérisé en ce que** le revêtement de surface (18) présente une épaisseur de revêtement de 0,001 mm jusqu'à 0,1 mm, de préférence 0,01 mm jusqu'à 0,1 mm.

7. Dispositif selon l'une quelconque des revendications précédentes, **caractérisé en ce que** la chambre d'entrée et la chambre de sortie présentent une épaisseur de paroi d'environ 1,00 mm jusqu'à 4,5 mm.

8. Dispositif selon l'une quelconque des revendications précédentes, **caractérisé en ce que** le revêtement de surface est présent sur la surface, dirigée vers l'intérieur, de la chambre d'entrée et/ou de la chambre de sortie.

9. Dispositif selon l'une quelconque des revendications précédentes, **caractérisé en ce que** le revêtement de surface est présent sur la surface dirigée vers l'intérieur et la surface dirigée vers l'extérieur de la chambre d'entrée et/ou de la chambre de sortie.

10. Procédé pour l'application d'un revêtement de surface sur la chambre d'entrée et/ou la chambre de sortie d'un échangeur de chaleur selon l'une quelconque des revendications précédentes, **caractérisé en ce que** le revêtement de surface est vêtu par un procédé de laquage par pulvérisation ou d'un procédé de laquage par immersion.
